# EUROPÄISCHE PATENTSCHRIFT

(11) **EP 1 322 507 B1**
(45) Veröffentlichungstag und Bekanntmachung des Hinweises auf die Patenterteilung: **28.12.2005**
(21) Anmeldenummer: 01971717.2
(22) Anmeldetag: 15.09.2001
(51) Int. Cl.: B60S 1/40

(54) **SCHEIBENWISCHER**
WINDSCREEN WIPER
ESSUIE-GLACE

(30) Priorität: 20.09.2000 DE 10046439
(43) Veröffentlichungstag der Anmeldung: 02.07.2003
(73) Patentinhaber: ROBERT BOSCH GMBH, 70442 Stuttgart (DE)
(72) Erfinder: ZIMMER, Joachim, 77880 Sasbach (DE); RAPP, Harald, 77815 Buehl (DE)
(86) Internationale Anmeldenummer: PCT/DE2001/003554
(87) Internationale Veröffentlichungsnummer: WO 2002/024498

(56) Entgegenhaltungen:
- DE-A- 4 224 866
- DE-U- 8 710 593
- FR-A- 2 788 027

## Beschreibung

### Stand der Technik

Die Erfindung geht von einem Scheibenwischer nach dem Oberbegriff des Anspruchs 1 aus.

Bekannte Scheibenwischer weisen.einen Wischarm auf, der aus einem angetriebenen Befestigungsteil und einem mit diesem über ein Abklappgelenk verbundenen Gelenkteil aufgebaut ist. In der Regel weisen das Befestigungs- und das Gelenkteil ein zur Fahrzeugscheibe hin offenes u-förmiges Querschnittprofil auf. Zweckmäßigerweise sind im Innenraum der Profile weitere Bauteile angeordnet. So ist im Innenraum des Querschnittprofils des Gelenkteils eine Zugfeder angeordnet, welche das Gelenkteil mit dem Befestigungsteil verspannt. Zudem sind bei einigen Ausgestaltungen Wasserleitungen bzw. Spritzdüsen einer Scheibenwaschanlage im u-förmigen Querschnittprofil des Gelenkteils untergebracht.

Aus der DE 198 15 171 A1 ist ein Gelenkteil bekannt, wobei der vordere Bereich der integrierten Wischstange mehrfach gefaltet und zu einem Haken gebogen ist. Hierfür sind mehrere Verfahrensschritte in der Fertigung erforderlich. Außerdem besteht bei der starken Biegung um 180° die Gefahr, dass bei verzinktem Blechmaterial in den stark verformten Bereichen die Zinkschicht reißt und/oder ablöst. Ferner ist wegen der geringen Höhe trotz der Materialanhäufung im Bereich des Hakens das Widerstandsmoment gegen Biegung und Torsion relativ gering, so dass sich die Wischstange unter der Belastung elastisch verformt und zum Rattern neigt.

In der Regel besitzt das Wischblatt ein Tragbügelsystem und eine von diesem gehaltene Wischleiste. Der Haken der Wischstange greift in eine Haltefeder, die mit einer offenen Nabe auf einem Gelenkstift eines Mittelbügels des Tragbügelsystems sitzt und als Adapter und Lagerteil zwischen der Wischleiste und dem Wischblatt dient. Das so gebildete Gelenk und das Tragbügelsystem ermöglichen es, dass sich die Wischleiste einer Wölbung der Kraftfahrzeugscheibe anpasst. Um das Wischblatt seitlich zu führen, ist die Haltefeder einerseits mit ihren Seitenwänden zwischen zwei Seitenwangen des Mittelbügels und andererseits an den Seitenflächen der eingerasteten Wischstange geführt. Allerdings sind die Seitenflächen relativ klein. Sie sind daher hoch beansprucht und verschleißen schnell, so dass die Wischqualität auf Grund der schlechten Führung des Wischblatts schnell nachläßt.

Um ein verschlissenes Wischblatt austauschen zu können, wird das Wischblatt gegenüber dem Wischarm um etwa'90° verdreht und die Haltefeder in Längsrichtung aus dem Haken gezogen. Dies ist insbesondere bei relativ langen Haken umständlich, da in dieser Stellung der Montageraum zur Fahrzeugscheibe begrenzt ist, um das gedrehte Wischblatt in Längsrichtung zu verschieben.

Aus der DE 195 37 854 A1 ist eine Verbindung eines Wischarms mit einem Wischblatt mittels einer Haltefeder bekannt. Mindestens ein am freien Ende der Wischstange zur Fahrzeugscheibe abgewinkelter Finger greift formschlüssig in einen entsprechenden Führungsschacht der Haltefeder ein. Im Führungsschacht wird der gebogene Finger durch eine selbsttätige, an der Haltefeder angeformte Rastvorrichtung gehalten. Zum Wechseln des Wischblatts genügt zwar ein geringfügiges Verdrehen, so dass die Rastvorrichtung entriegelt werden kann und das Wischblatt einfach in Richtung zur Fahrzeugscheibe vom Wischarmende abgezogen werden kann,'jedoch bestehen die Wischstange und der angeformte Finger aus einem flachen Bandmaterial, wobei die Materialstärke die geringe Größe der seitlichen Führungsflächen bestimmt und ein kleines Widerstandsmoment gegen Biegung und Torsion aufweist.

DE-A- 4 224 866 offenbart den Oberbegriff des Anspruchs 1.

### Vorteile der Erfindung

Nach der Erfindung reicht das u-förmige Querschnittprofil des Gelenkteils bis zum freien Ende der Wischstange, und im Endbereich sind in gegenüberliegenden Seitenwangen des Querschnittprofils jeweils Stege mindestens eines Stegpaars ausgeformt, von denen mindestens ein Steg eine nach innen angewinkelte Lasche besitzt, wobei im montierten Zustand eine Haltefeder mit einem längs gerichteten Zapfen zwischen den Stegen eines Stegpaars eingreift und mit der Wischstange verrastet. Das einstückig mit der Wischstange ausgeführte Gelenkteil weist vorteilhafterweise wegen des durchgängigen U-Profils eine hohe Biege- und Torsionssteifigkeit auf, wodurch das Wischblatt unabhängig von den Betriebsbedingungen mit einem relativ konstanten Anstellwinkel über die Fahrzeugscheibe geführt wird, was zu einem guten Wischergebnis führt. Durch die größere Biege- und Torsionssteifigkeit des U-Profils kann ggf. die Blechdicke reduziert werden, so dass sich das Gewicht und die Materialkosten des Wischarms verringern.

Zudem wird die Fertigung vereinfacht und es werden Kosten eingespart, da das Gelenkteil aus einem Blechschnitt mit zwei Biegestufen und ggf. einer Kalibrierstufe hergestellt wird. Gleichzeitig können während des Abkantens andere Bereiche des Wischarms hergestellt werden, z.B. die Bereiche, die später zum Befestigen einer Zugfeder erforderlich sind. Dabei ist der Biegewinkel in allen Bereichen nicht größer als ca. 90°, so dass keine extremen Verformungen auftreten, so dass keine Gefahr besteht, dass sich die Schutzschicht des beschichteten Werkstoffs an den gebogenen Stellen ablöst oder einreißt. Es können somit problemlos verzinkte Blechtafeln oder auch andere.Materialien, wie Aluminium, verwendet werden.

Am Gelenkteil bilden die seitlichen Außenflächen der Stege und der angrenzenden u-förmigen Wischstange im Vergleich zu bekannten Wischstangen mit hakenförmigem Ende größere Führungsflächen zur Haltefeder. Ferner wird die Führung durch den Zapfen verbessert, der mit einem leichten Schiebe- oder Presssitz in den Hohlraum zwischen den Stegen eines Stegpaars eingreift und so gleichzeitig für eine sichere Verbindung zwischen der Haltefeder und der Wischstange sorgt. Die bessere Führung des Wischblatts wirkt sich positiv auf die Wischqualität aus, indem insbesondere bei geringer Feuchtigkeit auf der Fahrzeugscheibe die Ratterneigung des Wischblatts verringert wird. Durch die zahlreichen Variationsmöglichkeiten können viele bereits vorhandene aber auch neue Anwendungsfälle abgedeckt werden.

Um die Haltefeder in axialer Richtung zwischen den Stegen zu sichern, besitzt sie eine Rastfeder, die im montierten Zustand an einer Stirnseite eines Stegs oder einer Lasche einrastet. Zur Demontage des Wischblatts kann der Nietstift des Wischblatts aus der offenen Nabe der Haltefeder gezogen werden oder das Wischblatt kann zusammen mit der Haltefeder von der Wischstange demontiert werden. Hierzu wird das Wischblatt nur geringfügig gegenüber dem Wischarm gedreht. Schon mit einer geringen Drehung ist die Rastfeder gut zu erreichen und kann entriegelt werden. Danach wird das Wischblatt so weit in Längsrichtung verschoben, bis die Stegpaare an der Wischstange von den Zapfen gleiten. In einem letzten Montageschritt kann die Haltefeder aus dem Wischarm senkrecht herausgezogen werden.

Die Montage erfolgt in umgekehrter Reihenfolge und ist ebenfalls einfach, in nur zwei Richtungen, mit einer selbsttätigen Verriegelung und ohne zusätzliche Werkzeuge möglich. Dadurch wird vermieden, dass Bauteile falsch montiert werden oder durch nicht geeignete Werkzeuge zerkratzt werden. Bei der beschriebenen Montage bzw. Demontage kann die Haltefeder am Wischblatt vormontiert sein und wird beim Wischblattwechsel mit ausgetauscht, so dass ein weniger verschleißfester Werkstoff verwendet werden kann, der in etwa die Lebensdauer des Wischblatts garantiert. Sie kann aber an der Wischstange vormontiert werden und muss eine dementsprechend längere Lebensdauer aufweisen, die durch einen verschleißfesteren Werkstoff sichergestellt wird.

Ferner ist es möglich diese Lösung bei Scheibenwischern mit einem durchgängigem Design einzusetzen, da keine Öffnungen für Montagehilfen benötigt werden und der Wischarm die Haltefeder und die Öffnung im Mittelbügel weitgehend nach außen abdeckt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischstange mit einem angelenkten Wischblatt,
- Fig. 2: einen Endbereich einer erfindungsgemäßen Wischstange von oben gesehen im Vergleich zu einer bekannten Wischstange,
- Fig. 3-5: einen Endbereich einer erfindungsgemäßen Wischstange von unten gesehen im Vergleich zu einer bekannten Wischstange,
- Fig. 6: einen Schnitt gemäß einer Linie VI-VI in Fig.2,
- Fig. 7-9: Varianten zu Fig. 6,
- Fig. 10: eine perspektivische Darstellung eines Endbereichs und eines Stegpaares,
- Fig. 11-16: Varianten zu Fig.10,
- Fig. 17: eine perspektivische Darstellung einer Haltefeder von oben gesehen,
- Fig. 18: einen Längsschnitt durch eine Haltefeder,
- Fig. 19: eine schrittweise Demontage einer Haltefeder und
- Fig. 20: eine perspektivische Darstellung eines Wischblatts und eines Wischarms während der Montage bzw. Demontage.

### Beschreibung der Ausführungsbeispiele

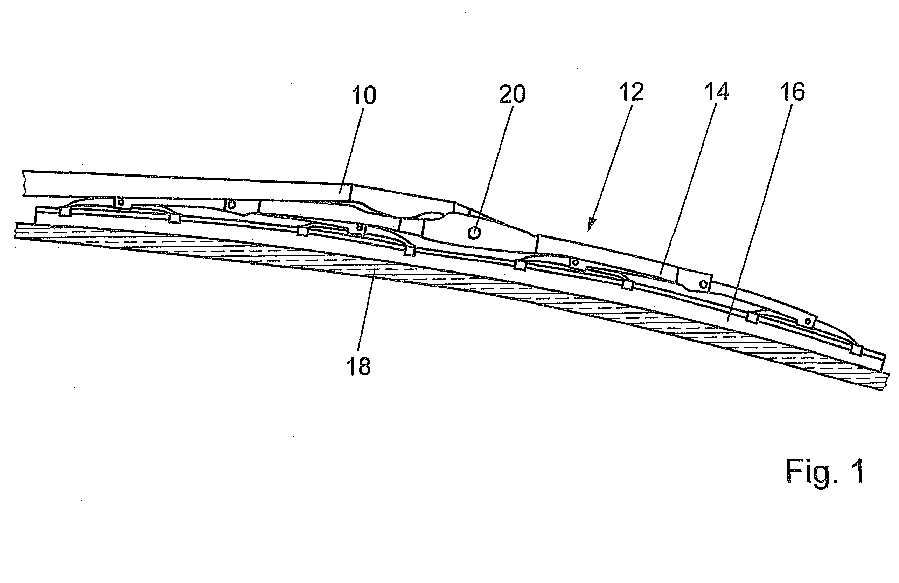

Ein Wischblatt 12, das aus einem Tragbügelsystem 14 und einer Wischleiste 16 besteht, ist über ein Gelenk schwenkbar mit einer Wischstange 10 verbunden, so dass sich die Wischleiste 16 der unterschiedlich gekrümmten Kontur einer Fahrzeugscheibe 18 während der Wischbewegung anpassen kann (Fig. 1). Das Gelenk besitzt einen Gelenkstift 20, der am Tragbügelsystem 14 angeordnet ist und in eine durch Federzungen 80 gebildete offene Nabe 66 einer Haltefeder 22 einrastet.

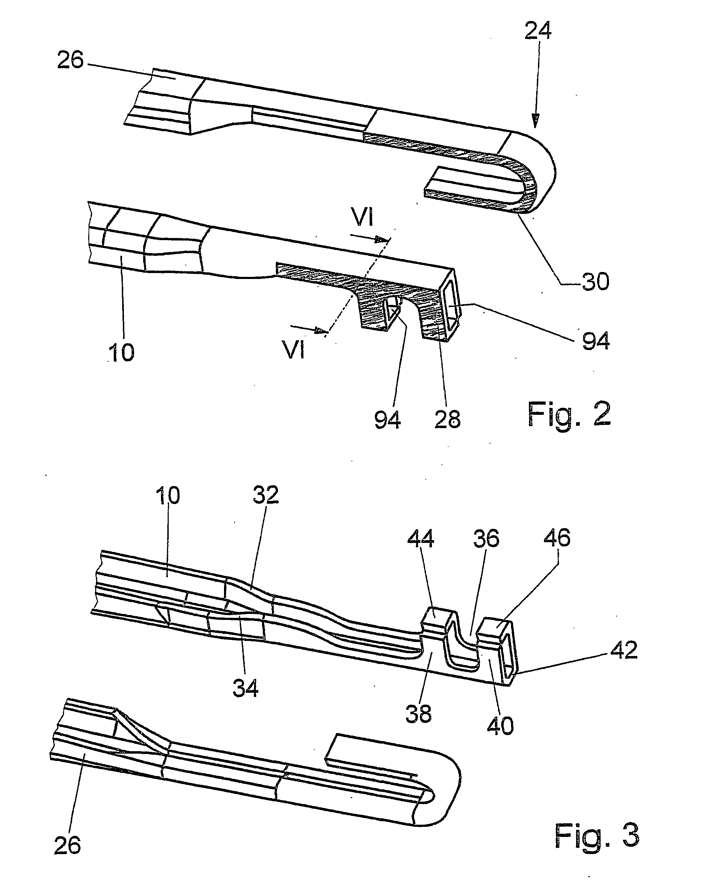

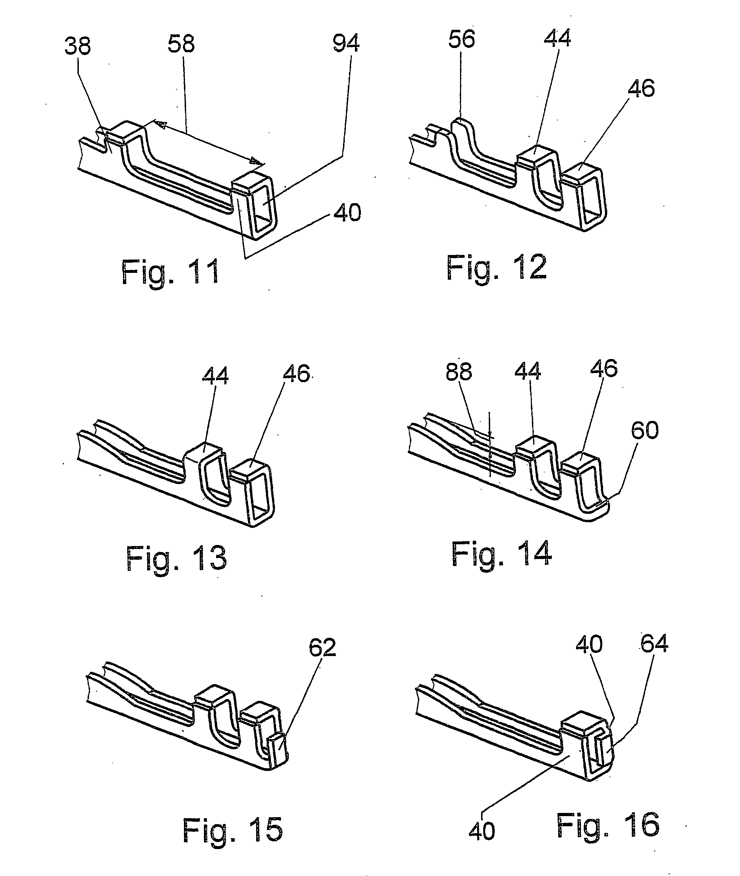

Die Wischstange 10 weist ein u-förmiges Querschnittprofil auf, das erfindungsgemäß bis zum freien Ende reicht. An diesem sind aus den Seitenwangen 32 und 34 des u-förmigen Querschnittprofils Stegpaare 38 und 40 gestanzt, die einen Abstand 58 zueinander aufweisen (Fig. 11). Jeweils an einem freien Ende eines Stegs eines Stegpaars 38, 40 sind Laschen 44, 46 angeformt, die um etwa 90° nach innen abgewinkelt sind und somit etwa parallel zur Deckwand 42 des u-förmigen Querschnittprofils verlaufen. Das Stegpaar 38 bzw. 40, die Deckwand 42 und die Laschen 44, 46 umgeben einen in Längsrichtung offenen Hohlraum 94 (Fig. 2).

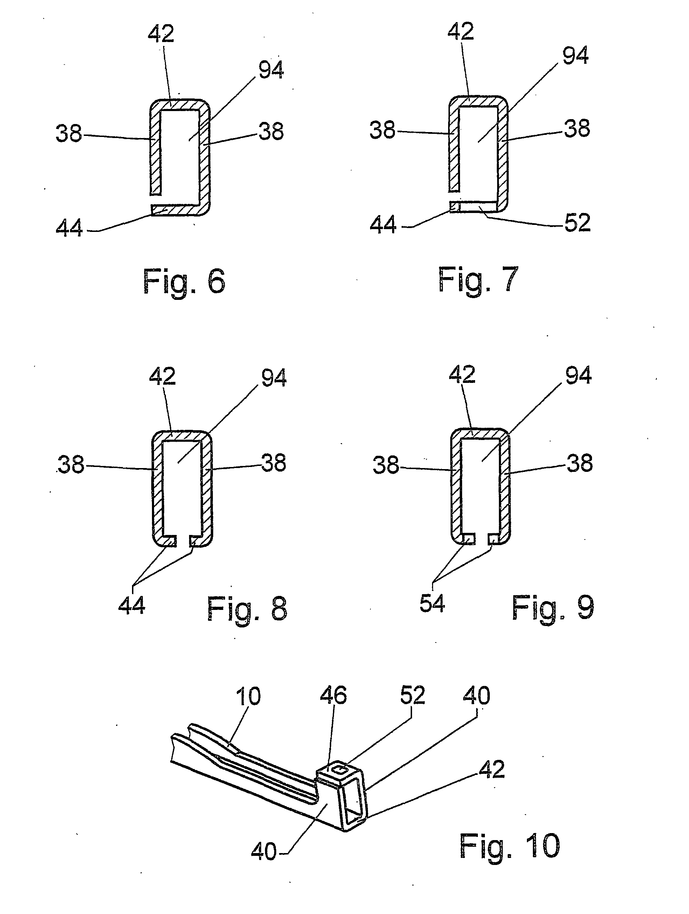

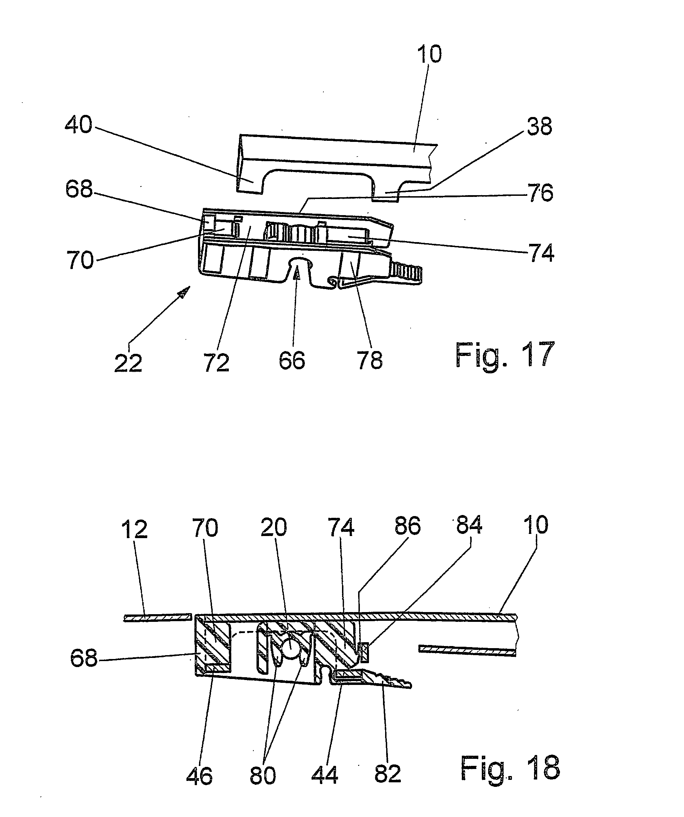

Das u-förmige Querschnittprofil der Wischstange 10 wird aus einem ebenen Blechteil erzeugt, das in der Regel aus einer verzinkten Blechtafel gestanzt ist. Dabei werden die Seitenwangen 32, 34 mit den Stegen 38, 40 und den Laschen 44, 46 rechtwinklig zur Deckwand 42 gebogen (Fig. 3). In einer weiteren Biegestufe werden die Laschen 44, 46 gegenüber den Stegen um weitere 90° abgewinkelt. Die Stege der Stegpaare 38 und 40 nach Fig. 2 bis 5 und Fig. 11, 12, 15 weisen jeweils an der gleichen Seitenwange 32 eine Lasche 44 und 46 auf, die parallel zur Deckwand 42 verläuft und bis zum jeweils gegenüberliegenden Steg der anderen Seitenwange 34 reicht, während bei der Ausführung nach Fig. 13 die Laschen 44 und 46 der Stegpaare 38, 40 verschiedenen Seitenwangen 32, 34 zugeordnet sind. Die Fig. 8 und Fig. 9 zeigen kurze Laschen 44, die von einander gegenüber liegenden Stegpaaren 38 ausgehen und in der Mitte zwischen den Stegen einen schmalen Spalt bilden.
Der Abstand 58 zwischen den Stegen 38 und 40 wird von einem Ausschnitt 36 in dem Blechteil gebildet (Fig. 3). Er kann entsprechend den Bedingungen des Anwendungsfalls dimensioniert werden. Ferner ist die Höhe 88 der Seitenwangen 32, 34 vor der Haltefeder 22 verringert, wodurch die Montage der Haltefeder 22 erleichtert wird. Die Stegpaare 38, 40 und die Laschen 44, 46 dienen zum Befestigen der Haltefeder'22 an der Wischstange 10 (Fig. 17). Die Haltefeder 22 weist zwei Seitenwände 76 und 78 auf, welche durch eine offene Nabe 66 und eine Stirnwand 68 am Ende der Haltefeder 22 verbunden sind. Zwischen den Seitenwänden 76 und 78 erstrecken sich in Längsrichtung der Haltefeder 22 zwei Zapfen 70 und 74, wobei der eine Zapfen'70 an einem Ende mit der Stirnwand 68 und der andere Zapfen 74 an einem Ende mit der Nabe 66 verbunden sind. Zwischen dem freien Ende des ersten Zapfens 70 und der Nabe 66 befindet sich ein Montageschacht 72. Zur Montage wird das Stegpaar 40 in den Montageschacht 72 eingeführt und anschließend zusammen mit der Lasche 46 auf den Zapfen 70 axial geschoben, während das Stegpaar 38 mit der Lasche 44 über den Zapfen 74 gleitet. Im montierten Zustand greift der Zapfen 70 dann mit einem leichten Presssitz oder Schiebesitz in den Hohlraum 94 des Stegpaars 40, wobei die Stirnwand 68 als Anschlag dient (Fig. 18).

Die Haltefeder 22 weist am Zapfen 74 eine Rastfeder 82 auf, die an der Lasche 44 des Stegpaars 38 selbsttätig einrastet, so dass die Haltefeder 22 selbstsichernd mit der Wischstange 10 verbunden ist. Die Rastfeder 82 kann auch an einer anderen Stelle der Haltefeder 22 angeordnet sein, so dass sie z.B. an Kanten oder Stirnseiten der Stegpaare 38, 40 oder in Rastlöchern 52 (Fig. 10) bzw. Rastvertiefungen einrastet. Um eine spielfreie Befestigung in Längsrichtung zu gewährleisten, ist ein Spannelement 86 vorgesehen, welches am Zapfen 74 angeformt ist und sich an einem axialen Anschlag 84 der Wischstange 10 abstützt, so dass die Haltefeder 22 zwischen der Rastfeder 82 und dem Spannelement 86 vorgespannt ist. Das Spannelement 86 kann auch so angeordnet sein, dass es sich an einem Anschlag 62, 64 (Fig. 15, Fig. 16) abstützt. Der Anschlag 62 ist an der Deckwand 42 angebracht, der Anschlag 64 an einem Stegpaar 40. Ferner kann ein Anschlag durch einen Kragen 60 gebildet werden, der an der Deckwand 42 angeformt ist (Fig. 14).

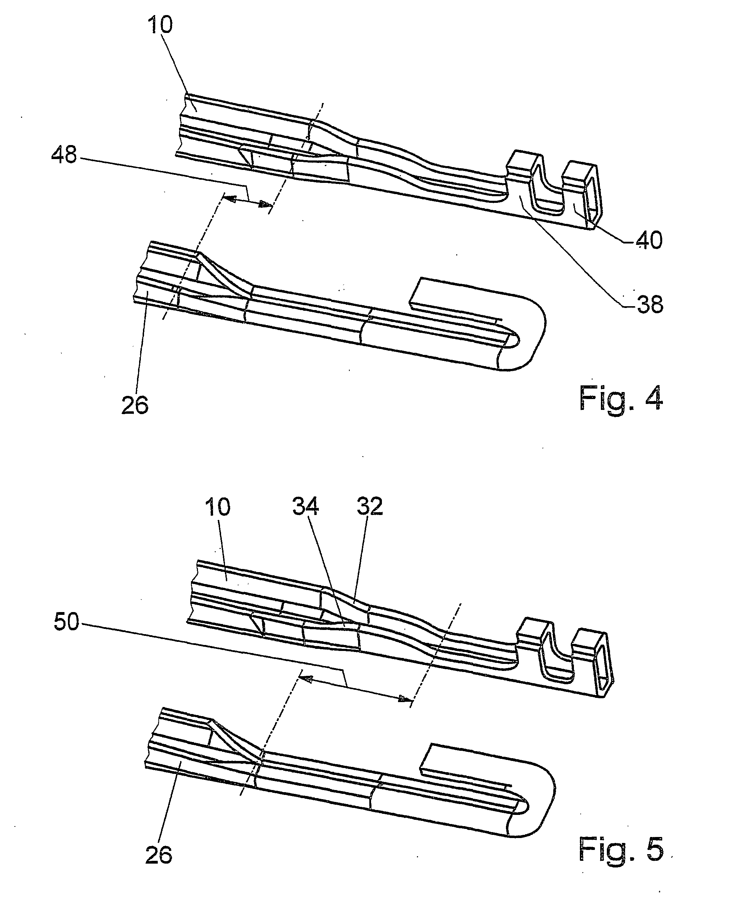

Der erfindungsgemäße Scheibenwischer besitzt eine gute Führung des Wischblatts 12. Dies ist zum einen darauf zurückzuführen, dass das biegesteife und torsionssteife u-förmige Querschnittprofil bis in den Bereich der Haltefeder durchgezogen ist, so dass die Wischstange 10 gegenüber einem üblichen hakenförmigen Ende 24 einer bekannten Wischstange 26 in einem Bereich 50 (Fig. 5) eine größere Biege- und Torsionssteifigkeit aufweist. Außerdem können in dem verlängerten Bauraum, insbesondere in einem Bereich 48 des offenen Querschnittprofils (Fig. 4), zwischen Seitenwangen 32, 34 zusätzliche Bauteile untergebracht werden, wie beispielsweise Wasserleitungen oder Spritzdüsen einer Scheibenwaschanlage. Zum anderen ergeben sich im Vergleich zu seitlichen Führungsflächen 30 der bekannten Wischstange 26 in vorteilhafter Weise durch die Stegpaare 38, 40 und die angrenzenden Teile der Seitenwangen 32, 34 große seitliche Führungsflächen 28 (Fig. 2), die den jeweiligen Einsatzbedingungen angepasst werden können. Die großen Führungsflächen 28 verringern die spezifische Belastung der Kontaktflächen zwischen der Wischstange 10 und der Haltefeder 22, so dass der Verschleiß gering ist und die Führungsqualität über der Lebensdauer des Scheibenwischers erhalten bleibt.

Die Führung und Verbindung der Haltefeder 22 werden ferner durch die Zapfen 70, 74 unterstützt, die in die Hohlräume 94 zwischen den Stegpaaren 38, 40 eingreifen. Dadurch kann ein Stegpaar 40 für Anwendungen mit einer geringen Belastung ausreichen (Fig. 10). Ein Rastloch 52 oder eine Ausklinkung 54 (Fig. 9) kann zum Verrasten der Haltefeder 22 dienen.

Schließlich zeigt Fig. 12 eine Variante, bei der ein weiteres Stegpaar 56 vorgesehen ist, das vor dem ersten Stegpaar 38 angeordnet ist und das Wischblatt 12 zusätzlich führt (Fig. 12). Dadurch ergibt sich eine besonders lange Führung des Wischblatts 12 in Längsrichtung.

Im Vergleich zur bekannten Wischstange 26 (Fig. 3) weist die Wischstange 10 keine Biegestellen mit einem Biegewinkel von 180° auf, sondern nur von maximal 90°. Dadurch werden starke Materialverformungen und daraus resultierende Beschädigungen von Schutzschichten vermieden.

Durch die zahlreichen Varianten zur Querschnittgestaltung der Stege 38, 40 und Laschen 44, 46, die auch miteinander kombiniert werden können, ist es möglich, viele und bereits vorhandene Haltefedern 22 aufzunehmen und eine große Anzahl von Anwendungsfällen abzudecken.

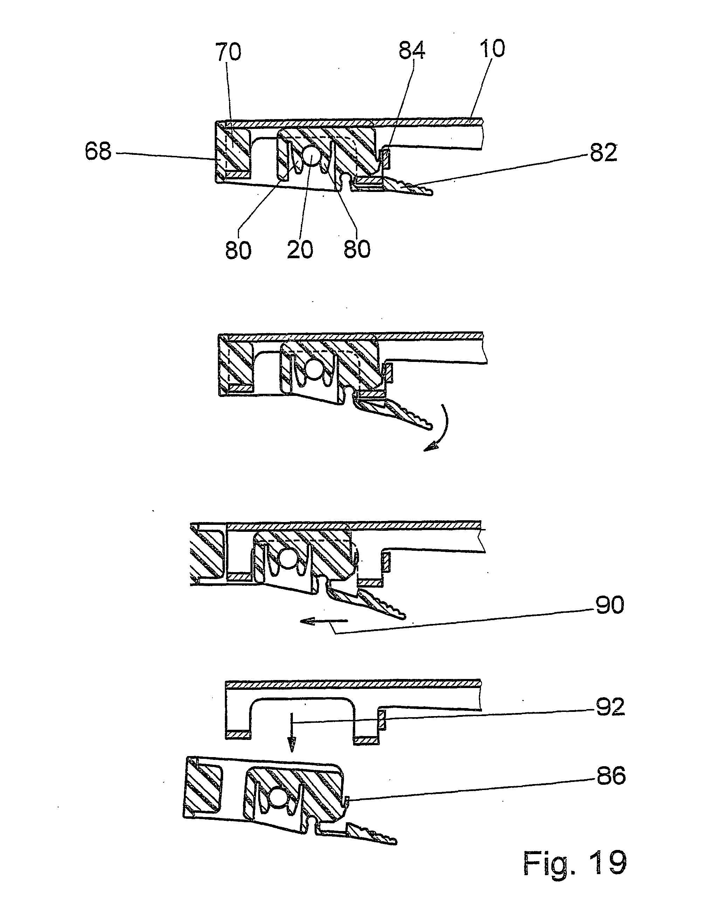

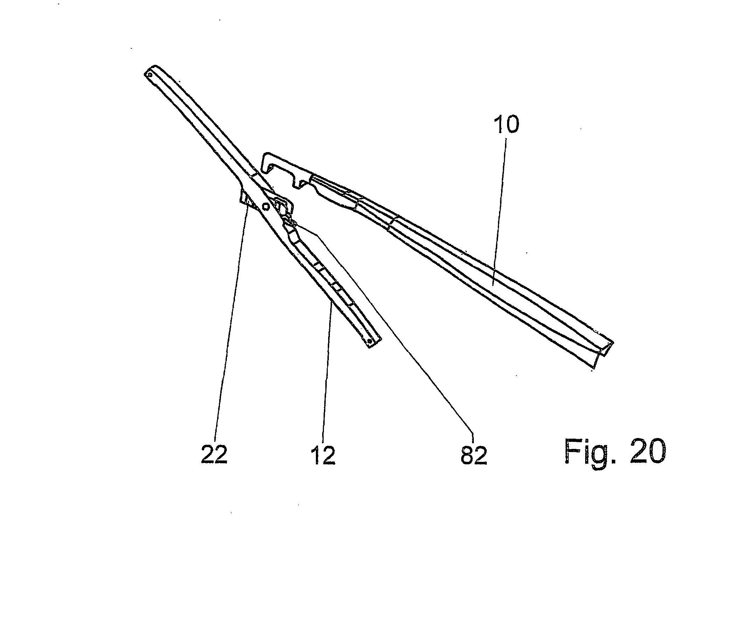

Die Wischstange 10 deckt die Haltefeder 22 nach außen fast vollständig ab und ist mit ihrem freien Ende und der Haltefeder 22 zwischen den Seitenwänden eines Mittelbügels des Tragbügelsystems 14 angeordnet, so dass sich ein durchgängiges Design mit dem Wischblatt 12 ergibt. Zum Wechseln des Wischblatts 12, wird der Gelenkstift 20 aus der offenen Nabe 66 herausgezogen oder die Wischstange 10 wird geringfügig gegenüber dem Wischblatt 12 verdreht, wobei auch die Rastfeder 82 über das Wischblatt 12 ragt und entriegelt werden'kann (Fig. 19 und Fig. 20). Anschließend wird die Wischstange 10 in Richtung 90 verschoben. Dabei gelangt das Stegpaar 40 in den Montageschacht 72, während das Stegpaar 38 vom Zapfen 74 gleitet. Durch eine senkrechte Bewegung in Richtung 92 wird die Wischstange 10 dann aus der Haltefeder 22 entnommen. Somit bestehen grundsätzlich die Möglichkeiten, dass die Haltefeder 22 entweder am Gelenkstift 20 des Wischblatts 12 oder an der Wischstange 10 vormontiert ist.

## Patentansprüche

1. Scheibenwischer mit einem Wischarm, der aus einem Befestigungsteil und aus einem Gelenkteil mit einer integrierten Wischstange (26) aufgebaut ist, die ein u-förmiges Querschnittprofil besitzt und an der ein Wischblatt (12) über eine Haltefeder (22) angelenkt ist, wobei die Seitenwände (76, 78) der Haltefeder (22) durch eine offene Nabe (66) für einen Gelenkstift (20) verbunden sind und mit ihren überstehenden Innenseiten die Wischstange (10) außen führen, wobei das u-förmige Querschnittprofil bis zum freien Ende der Wischstange (10) reicht und **dadurch gekennzeichnet, dass** im Endbereich in gegenüberliegenden Seitenwangen (32, 34) des Querschnittprofils mindestens ein Stegpaar (38, 40) ausgeformt ist, von denen mindestens eines eine nach innen abgewinkelte Lasche (44, 46) besitzt, wobei im montierten Zustand die Haltefeder (22) mit mindestens einem längs gerichteten Zapfen (70, 74) zwischen die Stege eines Stegpaars (38, 40) eingreift und mit der Wischstange (10) verrastet.

2. Scheibenwischer nach Anspruch 1,**dadurch gekennzeichnet, dass** die Lasche (44, 46) ein Rastloch (52) aufweist.

3. Scheibenwischer nach einem der vorhergehenden Ansprüche, **dadurch gekennzeichnet, dass** ausgehend von einer Stirnseite am Ende der Wischstange (10) an der Deckwand (42), an einem Steg des Stegpaars (40) oder an der Lasche (44, 46) ein abgewinkelter Anschlag (60, 62, 64) angeformt ist.

4. Scheibenwischer nach Anspruch 1, **dadurch gekennzeichnet, dass** am Ende der Wischstange (10) zwei Stegpaare (38, 40) vorgesehen sind, die einen Abstand (58) zueinander aufweisen.

5. Scheibenwischer nach einem der vorhergehenden Ansprüche, **dadurch gekennzeichnet, dass** die Seitenwangen (32, 34) des u-förmigen Querschnittprofils vor dem ersten Stegpaar (38) eine reduzierte Höhe (88) aufweisen.

6. Scheibenwischer nach Anspruch 1, **dadurch gekennzeichnet, dass** bei verschiedenen Stegpaaren (38, 40) die Laschen (44, 46) an den Stegen angeformt sind, die an der gleichen Seitenwange (32, 34) liegen.

7. Scheibenwischer nach einem der vorhergehenden Ansprüche, **dadurch gekennzeichnet, dass** bei verschiedenen Stegpaaren (38, 40) die Laschen (44, 46) wechselweise an einem Steg der einen Seitenwange (32) oder der anderen Seitenwange (34) angeformt sind.

8. Scheibenwischer nach einem der vorhergehenden Ansprüche, **dadurch gekennzeichnet, dass** mindestens ein Zapfen (70, 74) der Haltefeder (22) mit einer Stirnfläche einer Stirnwand (68) am Ende der Haltefeder (22) oder mit der Nabe (66) verbunden ist.

9. Scheibenwischer nach einem der vorhergehenden Ansprüche, **dadurch gekennzeichnet, dass** die Haltefeder (22) zwischen der Stirnwand (68) und der Nabe (66) mindestens einen quer verlaufenden Montageschacht (72) aufweist, durch den ein Stegpaar (38, 40) der Wischstange (10) bei der Montage geführt wird.

10. Scheibenwischer nach einem der vorhergehenden Ansprüche, **dadurch gekennzeichnet, dass** die Haltefeder (22) eine Rastfeder (82) besitzt, die an einer Stirnseite eines Stegs (38, 40) oder einer Lasche (44, 46) einrastet.

11. Scheibenwischer nach einem der vorhergehenden Ansprüche, **dadurch gekennzeichnet, dass** sich die Haltefeder (22) über ein Spannelement (86) an einem axialen Anschlag (62, 64, 84) an der Wischstange (10) abstützt.

12. Scheibenwischer nach einem der vorhergehenden Ansprüche, **dadurch gekennzeichnet, dass** die Haltefeder (22) an der Wischstange (10) vormontiert ist.

13. Scheibenwischer nach einem der vorhergehenden Ansprüche, **dadurch gekennzeichnet, dass** die Haltefeder (22) an dem Wischblatt (12) vormontiert ist.

## Claims

1. Windscreen wiper with a wiper arm which is constructed from a fastening part and from a joint part with an integrated wiper rod (26) which has a U-shaped cross-sectional profile and to which a wiper blade (12) is coupled via a retaining spring (22), the side walls (76, 78) of the retaining spring (22) being connected by an open hub (66) for a joint pin (20) and, by means of their protruding insides, guiding the wiper rod (10) on the outside, the U-shaped cross-sectional profile reaching as far as the free end of the wiper rod (10), and **characterized in that** at least one pair of webs (38, 40) is formed in the end region, in opposite side cheeks (32, 34) of the cross-sectional profile, at least one of which pairs of webs has an inwardly angled tab (44, 46), the retaining spring (22), in the fitted state, engaging with at least one longitudinally directed pin (70, 74) between the webs of a pair of webs (38, 40) and being latched to the wiper rod (10).

2. Windscreen wiper according to Claim 1, **characterized in that** the tab (44, 46) has a latching hole (52).

3. Windscreen wiper according to one of the preceding claims, **characterized in that**, starting from one end side, an angled stop (60, 62, 64) is integrally formed at the end of the wiper rod (10) on the cover wall (42), on one web of the pair of webs (40) or on the tab (44, 46).

4. Windscreen wiper according to Claim 1, **characterized in that** two pairs of webs (38, 40) which are at a distance (58) from each other are provided at the end of the wiper rod (10).

5. Windscreen wiper according to one of the preceding claims, **characterized in that** the side cheeks (32, 34) of the U-shaped cross-sectional profile have a reduced height (88) before the first pair of webs (38).

6. Windscreen wiper according to Claim 1, **characterized in that**, in the case of different pairs of webs (38, 40) the tabs (44, 46) are integrally formed on the webs which are situated on the same side cheek (32, 34).

7. Windscreen wiper according to one of the preceding claims, **characterized in that**, in the case of different pairs of webs (38, 40), the tabs (44, 46) are integrally formed either on a web of the one side cheek (32) or of the other side cheek (34).

8. Windscreen wiper according to one of the preceding claims, **characterized in that** at least one pin (70, 74) of the retaining spring (22) is connected to an end surface of an end wall (68) at the end of the retaining spring (22) or to the hub (66).

9. Windscreen wiper according to one of the preceding claims, **characterized in that** the retaining spring (22) has, between the end wall (68) and the hub (66), at least one installation shaft (72) which runs transversely and through which one pair of webs (38, 40) of the wiper rod (10) is guided during installation.

10. Windscreen wiper according to one of the preceding claims, **characterized in that** the retaining spring (22) has a latching spring (82) which latches onto an end side of a web (38, 40) of a tab (44, 46).

11. Windscreen wiper according to one of the preceding claims, **characterized in that** the retaining spring (22) is supported on an axial stop (62, 64, 84) on the wiper rod (10) via a clamping element (86).

12. Windscreen wiper according to one of the preceding claims, **characterized in that** the retaining spring (22) is preassembled on the wiper rod (10).

13. Windscreen wiper according to one of the preceding claims, **characterized in that** the retaining spring (22) is preassembled on the wiper blade (12).

## Revendications

1. Essuie-glace comportant un bras formé d'une pièce de fixation, d'une pièce d'articulation et d'une tige (26) intégrée, celle-ci ayant une section en forme de U et est articulée à un balai d'essuie-glace (12) celle-ci par l'intermédiaire d'un ressort de fixation (22),
les parois latérales (76, 78) du ressort de fixation (22) sont reliées par un moyeu ouvert (66) pour recevoir un axe d'articulation (20) et ses côtés intérieurs en saillie conduisent la tige (10) vers l'extérieur,
la section en forme de U arrive jusqu'à l'extrémité libre de la tige (10),
**caractérisé en ce qu'**
au moins une paire d'entretoises (38, 40) est formée dans la zone d'extrémité, par les parois latérales opposées (32, 34) de la section dont au moins l'une a une patte (44, 46) repliée vers l'intérieur, et
à l'état monté, le ressort de fixation (22) s'accroche à au moins un tourillon (70, 74) dirigé le long de celui-ci entre l'entretoise d'une paire d'entretoises (38, 40) et s'accroche à la tige (10).

2. Essuie-glace selon la revendication 1,
**caractérisé en ce que**
la patte (44, 46) comporte un orifice d'encliquetage (52).

3. Essuie-glace selon l'une des revendications précédentes,
**caractérisé en ce que**
partant d'une face frontale à l'extrémité de la tige (10), une butée (60, 62, 64), repliée est formée sur la paroi supérieure (42), sur une entretoise de la paire d'entretoises (40) ou sur la patte (44, 46).

4. Essuie-glace selon la revendication 1,
**caractérisé en ce que**
l'extrémité de la tige (10) comporte deux paires d'entretoises (38, 40) écartées l'une de l'autre d'une distance (58).

5. Essuie-glace selon l'une des revendications précédentes,
**caractérisé en ce que**
les parois latérales (32, 34) de la section en forme de U ont une hauteur réduite (88) en avant de la première paire d'entretoises (38).

6. Essuie-glace selon la revendication 1,
**caractérisé en ce que**
pour différentes paires d'entretoises (38, 40), les pattes (44, 46) sont formées sur les entretoises qui correspondent aux mêmes côtés (32, 34).

7. Essuie-glace selon l'une des revendications précédentes,
**caractérisé en ce que**
pour plusieurs paires d'entretoises (38, 40), les pattes (44, 46) sont prévues alternativement sur une entretoise d'un côté (32) et de l'autre côté (34).

8. Essuie-glace selon l'une des revendications précédentes,
**caractérisé par**
au moins un tourillon (70, 74) du ressort de fixation (22) est relié à la face frontale est reliée d'une paroi frontale (68) à l'extrémité du ressort de fixation (22) ou au moyeu (66).

9. Essuie-glace selon l'une des revendications précédentes,
**caractérisé en ce que**
le ressort de fixation (22) comporte au moins une cavité de montage (72) transversale entre la paroi frontale (68) et le moyeu (66) à travers laquelle passe une paire d'entretoises (38, 40) de la tige (10) lors du montage.

10. Essuie-glace selon l'une des revendications précédentes,
**caractérisé en ce que**
le ressort de fixation (22) comporte un ressort d'encliquetage (82) qui s'accroche contre une face frontale d'une entretoise (38, 40) ou d'une patte (44, 46).

11. Essuie-glace selon l'une quelconque des revendications précédentes,
**caractérisé en ce que**
le ressort de fixation (22) s'appuie par un élément de serrage (86) contre une butée axiale (62, 64, 94) de la tige (10).

12. Essuie-glace selon l'une quelconque des revendications précédentes,
**caractérisé en ce que**
le ressort de fixation (22) est préassemblé à la tige (10).

13. Essuie-glace selon l'une quelconque des revendications précédentes,
**caractérisé en ce que**
le ressort de fixation (22) est préassemblé au balai d'essuie-glace (12).
